# EUROPÄISCHE PATENTSCHRIFT

(11) **EP 2 379 282 B1**
(45) Veröffentlichungstag und Bekanntmachung des Hinweises auf die Patenterteilung: **07.09.2016**
(21) Anmeldenummer: 09737430.0
(22) Anmeldetag: 21.10.2009
(51) Int. Cl.: B25D 17/24

(54) **HANDWERKZEUG MIT GEGENSCHWINGER**
HAND TOOL HAVING COUNTER-OSCILLATOR
OUTIL MANUEL AVEC UN OSCILLATEUR OPPOSÉ

(30) Priorität: 18.12.2008 DE 102008054873
(43) Veröffentlichungstag der Anmeldung: 26.10.2011
(73) Patentinhaber: Robert Bosch GmbH, 70442 Stuttgart (DE)
(72) Erfinder: BAUMANN, Otto, 70771 Leinfelden-Echterdingen (DE); SCHMID, Hardy, 70565 Stuttgart (DE); HERR, Tobias, 70569 Stuttgart (DE)
(86) Internationale Anmeldenummer: PCT/EP2009/063798
(87) Internationale Veröffentlichungsnummer: WO 2010/069647

(56) Entgegenhaltungen:
- WO-A-2004/082897
- WO-A-2008/010467
- US-A- 5 025 562
- US-A1- 2001 011 420

## Beschreibung

### Stand der Technik

Die Erfindung betrifft ein Handwerkzeug, insbesondere einen Bohrhammer, einen Schlaghammer oder eine Säge, insbesondere Säbelsäge. Das Handwerkzeug weist ein Huberzeugungselement und einen Antrieb auf, wobei der Anhieb ausgebildet ist, das Huberzeugungselement entlang einer Translationsachse insbesondere periodisch hin- und herzubewegen. Das Handwerkzeug weist auch eine Aufnahmevorrichtung für ein Werkzeug auf, wobei die Aufnahmevorrichtung für das Werkzeug mit dem Huberzeugungselement witkverbunden ist. Das Handwerkzeug weist wenigstens ein Gegengewicht auf, welches mit dem Antrieb derart wirkverbunden ist, dass wenigstens durch die Hin- und Herbewegung mindestens mittelbar verursachten Kräfte wenigstens teilweise kompensiert werden können.

Aus der DE 282015 der Anmelderin ist ein Handwerkzeug bekannt, bei dem ein Huberzeugungselement über eine Zylinderkurve eines rotierenden Zylinders in eine Translationsbewegung versetzt werden kann.

Aus der WO 2004/082897 ist ein Handwerkzeug nach dem Oberbegriff des Anspruchs 1 bekannt.

### Offenbarung der Erfindung

Erfindungsgemäß ist bei dem Handwerkzeug der eingangsgenannten Art das Gegengewicht entlang der Translationsachse hin- und herbewegbar gelagert, gemäß Anspruch 1. Das Gegengewicht ist mit einer insbesondere in einer Oberfläche eines drehbar gelagerten Rotationskörpers ausgeformten Führungskurve im Wirkeingriff. Die Führungskurve ist derart ausgebildet, dass das Gegengewicht beim Drehen des Rotationskörpers hin- und hergeschwungen werden kann.

Die mindestens mittelbar durch die Hin- und Herbewegung des Huberzeugungselements erzeugten Kräfte können beispielsweise mittelbar erzeugte Kräfte durch beschleunigte oder abgebremste Massen umfassen, insbesondere Vibrationskräfte- Andere mittelbar durch die Hin- und Herbewegung des Huberzeugungselements erzeugten Kräfte können beispielsweise Druckkräfte, insbesondere eine Druckkraft eines Gasvolumens eines Luftfederschlagwerks sein.

Durch den Antrieb des Gegengewichts mittels einer Führungskurve kann das Gegengewicht vorteilhaft besonders platzsparend und aufwandsgünstig hin- und herbewegt werden. Weiter vorteilhaft ist durch die Führungskurve eine nahezu frei wählbare Schwingungsform der Schwingung des Gegengewichts wählbar.

Bevorzugt weist der Rotationskörper eine insbesondere in einer Oberfläche des Rotationskörpers ausgeformte Führungskurve für das Huberzeugungselement auf. Das Huberzeugungselement ist mit der Führungskurve für das Huberzeugungselement in Wirkeingriff. Die Führungskurve ist derart ausgebildet, dass das Huberzeugungselement beim Drehen des Rotationskörpers hin- und hergeschwungen werden kann.

Die Führungskurve ist bevorzugt in Form einer Vertiefung oder eines Durchbruchs in einem zylinderförmigen Rotationskörper ausgebildet.

Weiter bevorzugt steht das Huberzeugungselement und/oder das Gegengewicht mittels eines Verbindungselements, insbesondere einer Kugel, mit der Führungskurve des Rotationskörpers in Wirkeingriff.

Erfindungsgemäß, verläuft eine Rotationsachse des Rotationselements koaxial zur Translationsachse. Durch diese Anordnungen kann besonders effizient eine Kraft, mindestens mittelbar verursacht durch das Hin- und Herbewegen, insbesondere das Hin- und Herschwingen kompensiert werden.

Bevorzugt verläuft eine Schwerpunktbahn des Gegengewicht beim Hin- und Herschwingen während einer Schwingungsperiode überwiegend, bevorzugt vollständig in der Translationsachse. Dadurch wird vorteilhaft ein besonders effizientes Kompensieren der durch das Hin- und Herbewegen verursachten Kräfte bewirkt.

In einer bevorzugten Ausführungsform des Handwerkzeugs ist die Führungskurve für das Gegengewicht und/oder die Führungskurve für das Huberzeugungselement derart ausgebildet, dass die Schwingbewegung des Huberzeugungselement und die Schwingbewegung des Gegengewicht zueinander eine Phasenverschiebung ungleich 90 Grad und/oder ungleich 180 Grad aufweisen. Dadurch kann vorteilhaft - beispielsweise im Falle einer Ausführung des Handwerkzeugs als Schlaghammer - eine durch eine Luftfeder verursachte zusätzliche Phasenverschiebung vorteilhaft kompensiert werden.

Bevorzugt beträgt eine Phasenverschiebung zwischen der Schwingungsbewegung des Huberzeugungselements und der Schwingungsbewegung des Gegengewichtes zwischen 200 und 270 Grad, weiter bevorzugt zwischen 220 und 250 Grad, besonders bevorzugt zwischen 230 Grad und 240 Grad. Vorteilhaft wird die Phasenverschiebung ungleich 180 Grad durch den Rotationskörper mit der Führungskurve ermöglicht.

Bevorzugt ist eine Schwingungsfrequenz des Huberzeugungselement ungleich einer Schwingungsfrequenz des Gegengewichts. Dadurch kann vorteilhaft eine weitere Schwingung, beispielsweise verursacht durch Vibrationen, vorteilhaft kompensiert werden.

Bevorzugt ist eine Schwingungsform des Huberzeugungselement und/oder eine Schwingungsform des Gegengewichts wenigstens schwingungsperiodenabschnittsweise ungleich einer Sinusform. Durch eine solche Schwingungsform kann beispielsweise vorteilhaft während einer Schwingungsperiode - wenigstens schwingungsperiodenabschnittsweise eine größere Schwingungskompensationskraft aufgebracht werden, als bei einer bloßen Sinuskurve.

Weiter bevorzugt ist die Schwingungsform durch eine Fourierreihe gebildet. Die Schwingungsform kann so vorteilhaft 2Π-periodische und stetige Schwingungskurvenformen annehmen.

Der Antrieb umfasst bevorzugt einen Antriebsmotor. Der Antriebsmotor ist beispielsweise ein elektrischer Antriebsmotor, insbesondere ein elektronisch kommutierter Elektromotor. In einer anderen Ausführungsform ist der Antriebsmotor ein pneumatischer, insbesondere druckgasgetriebener Antriebsmotor.

Die Erfindung wird nun im Folgenden die Erfindung wird nun im Folgenden anhand von weiteren Figuren und Ausführungsbeispielen beschrieben.
Figur 1 zeigt ein Ausführungsbeispiel für ein als Bohrhammer ausgebildetes Handwerkzeug;
Figur 2 zeigt ein Ausführungsbeispiel für ein Verfahren zum Kompensieren von Schwingkräften eines Huberzeugungselements eines Handwerkzeugs.

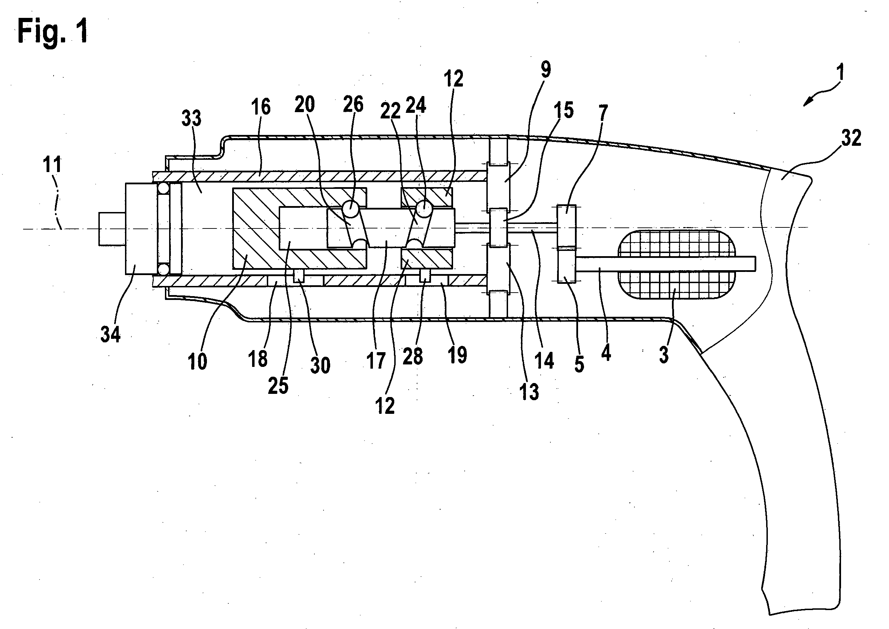

Figur 1 zeigt schematisch einen Bohrhammer 1 in einer Schnittdarstellung. Der Bohrhammer 1 weist einen Antriebsmotor 3 auf, wobei eine Antriebswelle 4 des Antriebsmotors im Bereich eines Endes ein Ritzel 5 aufweist. Das Ritzel 5 weist eine stirnseitige Verzahnung auf, welche mit einem Zahnrad 7 in Wirkeingriff steht und zusammen mit dem Zahnrad 7 kämmt.

Der Antriebsmotor 3 ist Teil eines Antriebs des Handwerkzeugs, wobei der Antrieb ausgebildet ist, ein Huberzeugungselement 10 entlang einer Translationsachse 11 hin- und herzubewegen.

Der Antrieb weist auch eine Zwischenwelle 14 auf, welche mit dem Zahnrad verbunden ist und von dem Zahnrad 7 in eine Drehbewegung um eine zur Translationsachse koaxiale Drehachse versetzt werden kann. Die Zwischenwelle 14 weist ein auf der Zwischenwelle 40 angeordnetes, von dem Zahnrad 7 längsaxial beabstandetes Zahnrad 15 auf, welches ein zentrales Zahnrad eines Planetengetriebes bildet. Die Zwischenwelle 14 ist auch mit einem Rotationskörper 17 verbunden, welcher derart drehbar gelagert ist, dass der Rotationskörper um die zur Translationsachse 11 koaxiale Drehachse drehen kann.

Der Rotationskörper 17 ist zylinderförmig ausgebildet und weist zwei Führungskurven auf, nämlich eine Führungskurve 20 für das Huberzeugungselement 10, und eine Führungskurve 22 für einen Gegenschwinger 12. Die Führungskurven 20 und 22 sind jeweils in Form einer Ausnehmung in einer Oberfläche des zylinderförmigen Rotationskörpers 28 ausgebildet.

Der Gegenschwinger 12 ist in Form eines Ringes oder in Form eines Hohlzylinders ausgebildet, wobei der Hohlzylinder oder der Ring in einer Innenwand jeweils eine Ausnehmung für ein Verbindungsmittel, insbesondere einer Kugel zum Wirkeingreifen mit der Führungskurve 22 aufweist. Der Gegenschwinger 12 nimmt den Rotationskörper 28 wenigstens teilweise auf.

Das Handwerkzeug 1 weist auch eine Werkzeugspindel 16 auf. Die Werkzeugspindel 16 weist im Bereich eines Endes eine - in dieser Abbildung nicht dargestellte - Aufnahmevorrichtung für ein Werkzeug auf. Die Werkzeugspindel 16 ist in Form eines Hohlzylinders ausgebildet, welcher ausgebildet ist, das Huberzeugungselement 10, den zylindrischen Rotationskörper 17 und die Zwischenwelle 14 wenigstens teilweise aufzunehmen.

Die Zwischenwelle 14 treibt mit dem Zahnrad 15 wenigstens 3 Planetenräder an, von denen die Planetenräder 12 und 13 dargestellt sind. Die Planetenräder 12 und 13 - sowie wenigstens ein weiteres Planetenrad - sind jeweils mit der Hohlzylinderförmigen Werkzeugspindel 16 verbunden und sind jeweils radial von der Translationsachse 11 beabstandet. Die Translationsachse 11 verläuft in diesem Ausführungsbeispiel auch koaxial zu einer Drehachse der Werkzeugspindel 16.

Das Huberzeugungselement 10 ist in diesem Ausführungsbeispiel wenigstens längsabschnittsweise Hohlzylinderförmig ausgebildet, wobei ein Hohlraum 25 des Hohlzylinders ausgebildet ist, den Rotationskörper 17 wenigstens teilweise aufzunehmen. Das Huberzeugungselement 10 weist eine Zylinderinnenwand auf, welche eine Ausnehmung zum Aufnehmen eines mitnehmenden Verbindungsmittels, insbesondere einer Kugel 26 aufweist. Das Huberzeugungselement 10 kann so mit der Führungskurve 20 in Wirkeingriff stehen. Der Rotationskörper 28 wird somit mit einem Endabschnitt von dem Huberzeugungselement und einem anderen Endabschnitt von dem Gegenschwinger 12 aufgenommen.

Das Huberzeugungselement 10 weist einen radial abweisenden Zapfen 30 auf, welcher in eine entsprechende Nut 18 der Werkzeugspindel eingreift und in dieser derart geführt ist, dass das Huberzeugungselement 10 sich entlang der Translationsachse 11 bewegen kann und gegen ein Rotationsbewegen um die zur Translationsachse 11 koaxiale Drehachse formschlüssig gesichert ist.

Der Gegenschwinger 12 weist einen radial abweisenden Zapfen 28 auf, welcher in eine entsprechende Nut 19 der Werkzeugspindel eingreift und dort derart geführt ist, dass der Gegenschwinger 12 sich entlang der Translationsachse 11 bewegen kann und gegen ein Rotationsbewegen um die zur Translationsachse 11 koaxiale Drehachse formschlüssig gesichert ist.

Die Funktionsweise des Handwerkzeugs 1 wird nun im Folgenden erläutert: Wenn der Antriebsmotor 3, welcher beispielsweise als elektronisch kommutierter Elektromotor ausgebildet ist, die Motorwelle 4 und so das Ritzel 5 in eine Drehbewegung versetzt, wird die Zwischenwelle 14 über das Zahnrad 7 - und so über ein einstufiges Getriebe, gebildet aus dem Zahnrad 7 und dem Motorritzel 5 - in eine Drehbewegung um die koaxial zur Translationsachse 11 verlaufende Drehachse versetzt. Mit der Zwischenwelle 14 dreht sich auch das Zahnrad 15 und der Rotationskörper 17. Mit dem Rotationskörper 17 wird das Huberzeugungselement 10 - gemäß der Ausbildung der Führungskurve 20 in eine translatorische Hin- und Herbewegung versetzt. Der Rotationskörper 17 versetzt auch das Gegengewicht 12 über die Führungskurve 22 in eine Hin- und Herbewegung. Die Führungskurve 20 und 22 sind jeweils derart ausgebildet, dass eine Phasenverschiebung zwischen dem Huberzeugungselement 10 und dem Gegenschwinger 12 zwischen 230 Grad und 240 Grad beträgt. Die Phasenverschiebung hat beispielsweise einen Bezugspunkt bei 0 Grad, welcher einem zum Werkzeug weisenden Totpunkt einer Bewegung des Huberzeugungselements 10 entspricht. Mit der Hin- und Herbewegung des Huberzeugungselements 10 wird ein Schläger 34 des Handwerkzeug hin- und herbewegt. Das Handwerkzeug 1 ist in diesem Ausführungsbeispiel einen Bohrhammer. Der Schläger 34 ist mit dem Huberzeugungselement 10 in diesem Ausführungsbeispiel über ein Luftvolumen 33 gekoppelt.

Das Zahnrad 15 treibt als zentrales Rad des Planetengetriebes die Planetenräder 12, 13 sowie das wenigstens eine weitere Planetenrad an. Mit denen Planetenrädern wird die Werkzeugspindel 16 in eine Drehbewegung um die zur Translationsachse 11 koaxiale Drehachse versetzt. Die Planetenräder und das zentrale Zahnrad 15 können zueinander beispielsweise ein Übersetzungsverhältnis von 1 zu 4 aufweisen.

Das einstufige Getriebe, gebildet aus dem Motorritzel 5 und dem Zahnrad 7 kann beispielsweise ein Übersetzungsverhältnis von 1 zu 5 aufweisen.

Die Motorwelle 4 des Antriebsmotors 3 ist in diesem Ausführungsbeispiel parallel zu Translationsachse 11 angeordnet. Denkbar ist jedoch auch eine Ausführungsform, bei der die Motorwelle 4 orthogonal zu Translationsachse, oder schräg zur Translationsachse 11 verläuft. So kann beispielsweise im Falle einer Ausführungsform einer orthogonalen Anordnung der Motorwelle 4 zur Translationsachse 11 eine Verzahnung des Motorritzels durch ein Kronenrad gebildet sein. Im Falle einer schrägen Anordnung der Motorwelle 4 zur Translationsachse 11 kann das Motorritzel 5 und/oder das Zahnrad 7 durch einen Kegelrad gebildet sein.

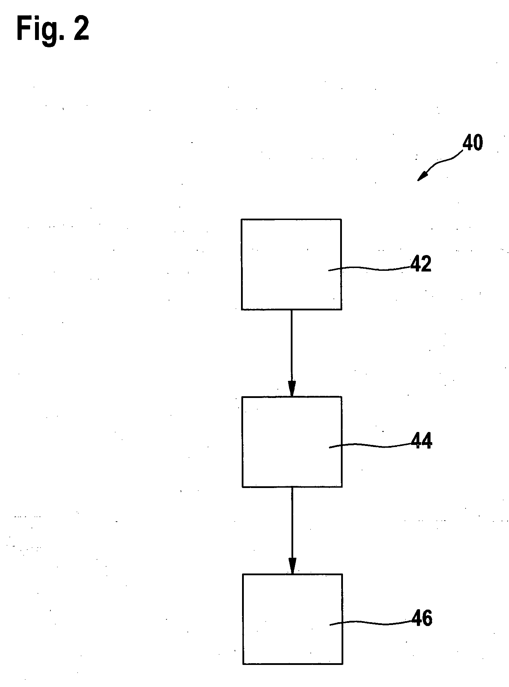

Figur 2 zeigt ein Ausführungsbeispiel für ein Verfahren 40 zum Kompensieren von Kräften eines Hin- und Herschwingens eines Huberzeugungselements eines Handwerkzeugs entlang einer Translationsachse. In einem Verfahrensschritt 42 wird ein Rotationskörper, beispielsweise der in Figur 1 dargestellte Rotationskörper 17 um eine Rotationsachse in eine Drehbewegung versetzt.

In einem weiteren Verfahrensschritt 44 wird ein Huberzeugungselement mittels einer Führungskurve in Abhängigkeit der Drehbewegung des Rotationskörpers in eine Schwingbewegung versetzt.

In einem weiteren Verfahrensschritt 46 wird ein Gegengewicht von dem Rotationskörper mittels einer Führungskurve derart entgegen die Schwingbewegung des Huberzeugungselements in eine schwingende Gegenbewegung versetzt, dass wenigstens durch das Schwingbewegen des Huberzeugungselements erzeugte Kräfte, - oder zusätzlich weitere in dem Handwerkzeug erzeugte Schwingkräfte - auf das Handwerkzeug durch die schwingende Gegenbewegung wenigstens teilweise oder vollständig aufgehoben werden.

## Patentansprüche

1. Handwerkzeug (1), insbesondere Bohrhammer, Schlaghammer oder Säge, mit einem Antrieb (3, 14, 16, 17) und mit einem Huberzeugungselement, wobei der Antrieb (3, 14, 16, 17) ausgebildet ist, das Huberzeugungselement (10) entlang einer Translationsachse (11) insbesondere periodisch hin- und herzubewegen, und mit einer Aufnahmevorrichtung für ein Werkzeug, welche mit dem Huberzeugungselement (10) wirkverbunden ist, wobei das Handwerkzeug (1) wenigstens ein Gegengewicht (12) aufweist, welches mit dem Antrieb (3, 14, 16, 17) derart wirkverbunden ist, dass wenigstens durch die Hin- und Herbewegung mindestens mittelbar verursachte Krätte wenigstens teilweise kompensiert werden können, wobei das Gegengewicht (12) entlang der Translationsachse (11) hin- und herbewegbar gelagert ist, wobei das Gegengewicht (12) mit einer in einem drehbar gelagerten Rotationskörper (17) ausgeformten Führungskurve (22) in Wirkeingriff ist und die Führungskurve (22) derart ausgebildet ist, dass das Gegengewicht (12) beim Drehen des Rotationskörpers (17) hin- und hergeschwungen werden kann,
**dadurch gekennzeichnet, dass**
eine Rotationsachse (11) des Rotationselements (17) koaxial zur Translationsachse (11) verläuft.

2. Handwerkzeug (1) nach Anspruch 1,
**dadurch gekennzeichnet, dass**
der Rotationskörper (17) eine insbesondere in einer Oberfläche des Rotationskörpers (17) ausgeformte Führungskurve (20) für das Huberzeugungselement (10) aufweist, und das Huberzeugungselement (10) mit der Führungskurve (20) für das Huberzeugungselement (10) in Wirkeingriff ist und die Führungskurve (20) für das Huberzeugungselement (10) derart ausgebildet ist, dass das Huberzeugungselement (10) beim Drehen des Rotationskörpers hin- und hergeschwungen werden kann.

3. Handwerkzeug (1) nach einem der vorhergehenden Ansprüche,
**dadurch gekennzeichnet, dass**
eine Schwerpunktbahn des Gegengewichtes (12) beim Hin- und Herschwingen während einer Schwingungsperiode überwiegend koaxial zur Translationsachse (11) verläuft

4. Handwerkzeug nach einem der vorhergehenden Ansprüche,
**dadurch gekennzeichnet, dass**
die Führungskurve (22) für das Gegengewicht (12) und/oder die Führungskurve (20) für das Huberzeugungselement (10) derart ausgebildet ist, dass die Schwingbewegung des Huberzeugungselements (10) und die Schwingbewegung des Gegengewichtes (12) zueinander eine Phasenverschiebung ungleich 90 Grad und/oder ungleich 180 Grad aufweisen

5. Handwerkzeug (1) nach einem der vorhergehenden Ansprüche,
**dadurch gekennzeichnet, dass**
eine Schwingfrequenz des Huberzeugungselements ungleich einer Schwingfrequenz des Gegengewichtes ist.

6. Handwerkzeug (1) nach einem der vorhergehenden Ansprüche,
**dadurch gekennzeichnet, dass**
eine Schwingungsform des Huberzeugungselements (10) und/oder eine Schwingungsform des Gegengewichtes (12) wenigstens schwingungsperiodenabschnittsweise ungleich einer Sinusform ist.

7. Handwerkzeug (1) nach Anspruch 6,
**dadurch gekennzeichnet, dass**
die Schwingungsform durch eine Fourierreihe gebildet ist.

## Claims

1. Hand tool (1), in particular hammer drill, percussion hammer or saw, having a drive (3, 14, 16, 17) and having a stroke-generating element, wherein the drive (3, 14, 16, 17) is configured to move the stroke-generating element (10) in particular periodically in a reciprocating movement along a translation axis (11), and having a receiving device for a tool, said receiving device being operatively connected to the stroke-generating element (10), wherein the hand tool (1) has at least one counterweight (12) which is operatively connected to the drive (3, 14, 16, 17) such that forces caused at least indirectly at least by the reciprocating movement can be at least partially compensated, wherein the counterweight (12) is mounted so as to be movable in a reciprocating movement along the translation axis (11), wherein the counterweight (12) is operatively engaged with a guide curve (22) formed in a rotatably mounted rotary body (17) and the guide curve (22) is configured such that the counterweight (12) can be oscillated in a reciprocating movement when the rotary body (17) rotates,
**characterized in that**
a rotation axis (11) of the rotary element (17) extends coaxially with the translation axis (11).

2. Hand tool (1) according to Claim 1,
**characterized in that**
the rotary body (17) has a guide curve (20), formed in particular in a surface of the rotary body (17), for the stroke-generating element (10), and the stroke-generating element (10) is operatively engaged with the guide curve (20) for the stroke-generating element (10) and the guide curve (20) for the stroke-generating element (10) is configured such that the stroke-generating element (10) can be oscillated in a reciprocating movement when the rotary body rotates.

3. Hand tool (1) according to either of the preceding claims,
**characterized in that**
a centre-of-gravity path of the counterweight (12) extends predominantly coaxially with the translation axis (11) during an oscillation period when oscillating in a reciprocating movement.

4. Hand tool according to one of the preceding claims,
**characterized in that**
the guide curve (22) for the counterweight (12) and/or the guide curve (20) for the stroke-generating element (10) is configured such that the oscillating movement of the stroke-generating element (10) and the oscillating movement of the counterweight (12) have a phase offset not equal to 90° and/or not equal to 180° with respect to one another.

5. Hand tool (1) according to one of the preceding claims,
**characterized in that**
an oscillation frequency of the stroke-generating element is not equal to an oscillation frequency of the counterweight.

6. Hand tool (1) according to one of the preceding claims,
**characterized in that**
an oscillation shape of the stroke-generating element (10) and/or an oscillation shape of the counterweight (12) is not equal to a sinusoidal shape at least in portions of an oscillation period.

7. Hand tool (1) according to Claim 6,
**characterized in that**
the oscillation shape is formed by a Fourier series.

## Revendications

1. Outil manuel (1), en particulier marteau perforateur, marteau percuteur ou scie, comprenant un entraînement (3, 14, 16, 17) et un élément de génération de course, l'entraînement (3, 14, 16, 17) étant réalisé pour animer d'un mouvement de va-et-vient notamment périodique l'élément de génération de course (10) le long d'un axe de translation (11), et comprenant un dispositif de réception pour un outil, qui est en liaison fonctionnelle avec l'élément de génération de course (10), l'outil manuel (1) présentant au moins un contrepoids (12) qui est en liaison fonctionnelle avec l'entraînement (3, 14, 16, 17) de telle sorte que des forces provoquées au moins indirectement par le mouvement de va-et-vient puissent au moins être compensées en partie, le contrepoids (12) étant supporté de manière déplaçable en va et vient le long de l'axe de translation (11), le contrepoids (12) étant en prise engagement fonctionnel avec une came de guidage (22) formée dans un corps rotatif supporté à rotation (17) et la came de guidage (22) étant réalisée de telle sorte que le contrepoids (12), lors de la rotation du corps rotatif (17), puisse être animé d'un mouvement de pivotement d'avant en arrière,
**caractérisé en ce**
**qu'**un axe de rotation (11) de l'élément de rotation (17) s'étend coaxialement à l'axe de translation (11).

2. Outil manuel (1) selon la revendication 1,
**caractérisé en ce que**
le corps rotatif (17) présente une came de guidage (20) pour l'élément de génération de course (10), formée notamment dans une surface du corps rotatif (17) et l'élément de génération de course (10) est en engagement fonctionnel avec la came de guidage (20) pour l'élément de génération de course (10) et la came de guidage (20) pour l'élément de génération de course (10) est réalisée de telle sorte que l'élément de génération de course (10), lors de la rotation du corps rotatif, puisse être animé d'un mouvement d'oscillation en va-et-vient.

3. Outil manuel (1) selon l'une quelconque des revendications précédentes,
**caractérisé en ce**
**qu'**une trajectoire du centre de gravité du contrepoids (12) lors du pivotement d'avant en arrière pendant une période d'oscillation s'étend essentiellement coaxialement à l'axe de translation (11).

4. Outil manuel selon l'une quelconque des revendications précédentes,
**caractérisé en ce que**
la came de guidage (22) pour le contrepoids (12) et/ou la came de guidage (20) pour l'élément de génération de course (10) est/sont réalisées de telle sorte que le mouvement d'oscillation de l'élément de génération de course (10) et le mouvement d'oscillation du contrepoids (12) présentent l'un par rapport à l'autre un déphasage différent de 90° et/ou différent de 180°.

5. Outil manuel (1) selon l'une quelconque des revendications précédentes,
**caractérisé en ce**
**qu'**une fréquence d'oscillation de l'élément de génération de course n'est pas égale à une fréquence d'oscillation du contrepoids.

6. Outil manuel (1) selon l'une quelconque des revendications précédentes,
**caractérisé en ce**
**qu'**une forme d'oscillation de l'élément de génération de course (10) et/ou une forme d'oscillation du contrepoids (12) est différente d'une forme sinusoïdale, au moins sur une portion de la période d'oscillation.

7. Outil manuel (1) selon la revendication 6,
**caractérisé en ce que**
la forme d'oscillation est formée par une série de Fourier.
